# EUROPEAN PATENT APPLICATION

(11) **EP 3 225 799 A1**
(43) Date of publication of application: **04.10.2017**
(21) Application number: 17164142.6
(22) Date of filing: 31.03.2017
(51) Int. Cl.: F01M 1/08, F16K 31/40, F01M 1/16

(54) **PILOT OPERATED PISTON OIL COOLING JET CONTROL VALVE**

(30) Priority: 01.04.2016 US 201662317066 P; 06.02.2017 US 201762455363 P
(71) Applicant: HUSCO Automotive Holdings LLC, Waukesha, WI 53188-0257 (US)
(72) Inventor: WARDLE, Dean, Oconomowoc, WI Wisconsin 53066 (US); LAYNE, Michael, Waterford, WI Wisconsin 53185 (US); HEIDEMANN, Brian, Lake Mills, WI Wisconsin 53551 (US)
(74) Representative: Wynne-Jones, Lainé and James LLP

(57) **Abstract**

A pilot operated piston oil cooling jet control valve configured to be in communication with a main oil galley (208, 412, 58, 82), an oil pan (62), and a cooling jet is provided. The pilot operated piston oil cooling jet control valve includes a valve body (224, 402, 74), a pilot valve (32), and a main stage poppet (110, 236). The pilot valve (32) is arranged within the valve body (224, 402, 74) and includes a solenoid (220, 458, 54, 94) armature (136, 244, 460) movable between a first position (3) and a second position (3) and a pilot poppet (102, 232, 452) movable between a pilot open position (3) where flow is provided to the oil pan (62) and a pilot closed position (3) where flow is inhibited to the oil pan (62). The main stage poppet (110, 236) is arranged within the valve body (224, 402, 74) and is movable between a closed position (3) where flow is inhibited to the cooling jet and an open position (3) where flow is provided to the cooling jet.

## Description

### BACKGROUND

The present disclosure relates generally to control valves and, more specifically, to piston oil cooling jet (POCJ) control systems used in an internal combustion engine.

Vehicle engines can experience low oil pressure for various reasons. During a period of low oil pressure some oil consuming processes are more important than others. POCJ control systems provide priority oil flow to other vehicle or engine systems that require oil flow during a period of low oil pressure.

Internal combustion engines can include jets arranged to spray oil onto engine piston skirts to help control engine piston temperature. Direct flow from an engine oil pump passage to the jets can be provided by a POCJ control system that typically includes a primary valve and a separate pilot valve. Alternatively, the POCJ control system can block oil flow to the jets when cooling is not desired.

### SUMMARY OF THE INVENTION

In one aspect, the present disclosure provides a pilot operated piston oil cooling jet control valve configured to be in communication with a main oil galley, an oil pan, and a cooling jet. The pilot operated piston oil cooling jet control valve includes a valve body, a pilot valve, and a main stage poppet. The pilot valve is arranged within the valve body and includes a solenoid armature movable between a first position and a second position and a pilot poppet movable between a pilot open position where flow is provided to the oil pan and a pilot closed position where flow is inhibited to the oil pan. The main stage poppet is arranged within the valve body and is movable between a closed position where flow is inhibited to the cooling jet and an open position where flow is provided to the cooling jet.

In one aspect, the provides a pilot operated piston oil cooling jet control valve configured to be in communication with a main oil galley, an oil pan, and a cooling jet. The pilot operated piston oil cooling jet control valve includes a valve body that defines a main valve seat. A pilot housing is arranged within the valve body and defining an oil pan vent arranged in communication with the oil pan, a pilot valve seat, a check valve seat, and a main oil galley port. A pilot poppet is arranged within the pilot housing and movable between a pilot closed position where the pilot poppet engages the pilot valve seat and a pilot open position where the pilot poppet does not engage the pilot valve seat. A check valve is arranged within the pilot housing and in selective engagement with the check valve seat. A main stage poppet is slidingly received within the pilot housing and movable between an open position where the main stage poppet does not engage the main valve seat and flow is provided between the main oil galley and the cooling jet, and a closed position where the main stage poppet engages the main valve seat and flow is inhibited between the main oil galley and the cooling jet.

In one aspect, the present disclosure provides a pilot operated piston oil cooling jet control valve configured to be in communication with a main oil galley and at least one cooling jet. The piston oil cooling jet control valve includes a valve body defining a spring chamber arranged therein, and a pilot poppet arranged within the valve body. The pilot poppet is moveable between a pilot open position where fluid communication is provided from the spring chamber to the cooling jet and a pilot closed position where fluid communication is inhibited between the spring chamber and the cooling jet. The piston oil cooling jet control valve further includes a main poppet arranged within the valve body and moveable between an open position where fluid communication is provided from the main oil galley and the cooling jet and a closed position where fluid communication is inhibited between the main oil galley and the cooling jet. When the main poppet moves toward the open position, a variable orifice arranged within the valve body closes thereby increasing a pressure drop across the main poppet.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims and herein for interpreting the scope of the invention.

### DESCRIPTION OF DRAWINGS

The invention will be better understood and features, aspects and advantages other than those set forth above will become apparent when consideration is given to the following detailed description thereof. Such detailed description makes reference to the following drawings
Fig. 1 is a graph illustrating a priority function.
Fig. 2 is a hydraulic circuit diagram of a POCJ control system.
Fig. 3 is a schematic representation of the POCJ control system of Fig. 2.
Fig. 4 is a cross-sectional view of a POCJ control valve according to one embodiment of the invention in a first position.
Fig. 5 is a hydraulic circuit diagram of the POCJ control valve of Fig. 4.
Fig. 6 is a cross-sectional view of the POCJ control valve of Fig. 4 in a second position.
Fig. 7 is a hydraulic circuit diagram of the POCJ control valve of Fig. 6.
Fig. 8 is a cross-sectional view of the POCJ control valve of Fig. 4 in a third position.
Fig. 9 is a hydraulic circuit diagram of the POCJ control valve of Fig. 8.
Fig. 10 is a cross-sectional view of a POCJ control valve according to another embodiment of the invention in a first position.
Fig. 11 is a hydraulic circuit diagram of the POCJ control valve of Fig. 10.
Fig. 12 is a cross-sectional view of the POCJ control valve of Fig. 10 in a second position.
Fig. 13 is a hydraulic circuit diagram of the POCJ control valve of Fig. 12.
Fig. 14 is a cross-sectional view of the POCJ control valve of Fig. 10 in a third position.
Fig. 15 is a hydraulic circuit diagram of the POCJ control valve of Fig. 14.
Fig. 16 is a cross-sectional view of a POCJ control valve according to another embodiment of the invention in a first position.
Fig. 17 is a hydraulic circuit diagram of the POCJ control valve of Fig. 16.
Fig. 18 is a cross-sectional view of the POCJ control valve of Fig. 16 in a second position.
Fig. 19 is a hydraulic circuit diagram of the POCJ control valve of Fig. 18.
Fig. 20 is a cross-sectional view of the POCJ control valve of Fig. 16 in a third position.
Fig. 21 is a hydraulic circuit diagram of the POCJ control valve of Fig. 20.
Fig. 22 is a graph illustrating operating characteristics as a function of galley pressure for a standard POCJ control valve.
Fig. 23 is a graph illustrating operating characteristics as a function of galley pressure for the POCJ control valve of Fig. 16.

### DETAILED DESCRIPTION OF THE INVENTION

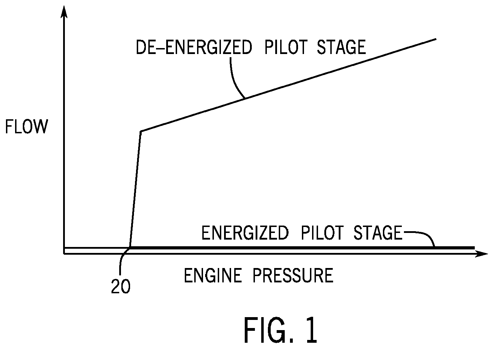

Some POCJ control valves provide a priority function by using a main stage high flow poppet valve. One priority function is shown in Fig. 1. Below a priority pressure setting 20, the main stage poppet valve is closed, blocking flow to piston cooling jets so that oil is available to other, more critical engine functions/systems. A biasing spring holds the main stage poppet valve closed until the priority pressure setting 20 is reached at a supply port. When pressure in the supply port reaches the priority pressure setting 20, a force resulting from the oil pressure acting on the main stage poppet valve exceeds the biasing spring's bias force. Above the priority pressure setting 20 the main stage poppet valve opens and allows oil to flow to the cooling jets. When oil pressure is sufficiently above the priority pressure setting 20, but flow is not needed at the cooling jets to control a piston skirt temperature, a separate pilot valve can be energized to direct pressurized oil to a top portion of the main stage poppet valve. This pressure plus the biasing force of the biasing spring act to close the main stage poppet valve and block the oil flow path to the cooling jets.

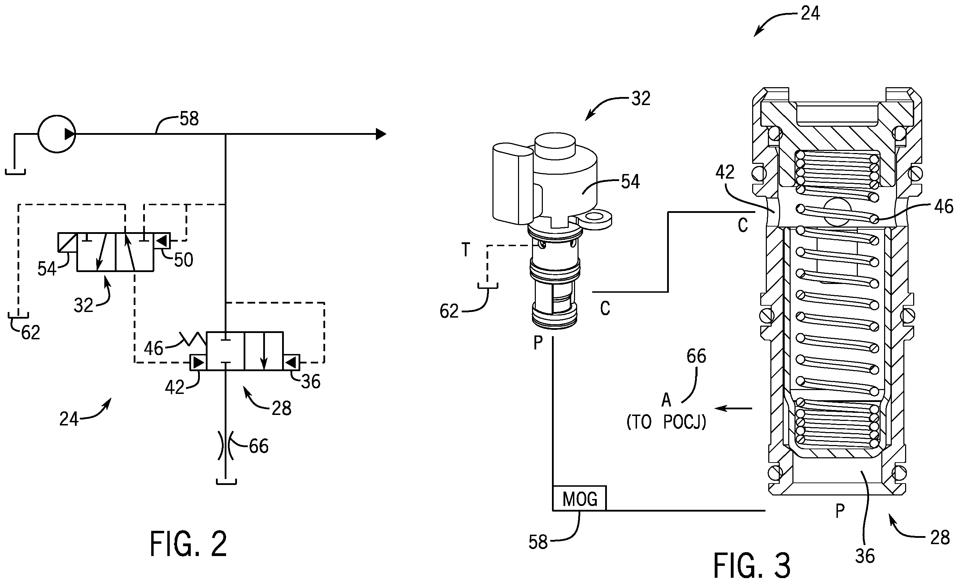

Fig. 2 illustrates one example of a POCJ control valve 24 that can be used to perform the priority function described above. The POCJ control valve 24 includes a main stage valve 28 and a pilot valve 32. The main stage valve 28 is a two-position two-way valve that includes an open pilot 36, a close pilot 42, and a biasing spring 46.

The pilot valve 32 is a two-position three-way valve and includes a vent pilot 50 and a solenoid 54.

A main oil galley 58 is under engine pressure and is in communication with the main stage valve 28, the open pilot 36, pilot valve 32, and the vent pilot 50. A non-pressurized oil pan 62 is in communication with the pilot valve 32. Cooling jets 66 are in communication with the main stage valve 28.

Engine pressure is provided by the main oil galley 58 to the vent pilot 50 and the open pilot 36. The engine pressure biases the main stage valve 28 toward an open position where oil is provided from the main oil galley 58 to the cooling jets 66. The engine pressure biases the pilot valve 32 toward a vent position where any pressure residing in the close pilot 42 of the main stage valve 28 is vented to the oil pan 62. The biasing spring 46 applies a biasing force that biases the main stage valve 28 toward a closed position where flow is inhibited between the main oil galley 58 and the cooling jets 66. The solenoid 54 moves the pilot valve into a cooling jet off position when energized such that engine pressure from the main oil galley 58 acts through the pilot valve 32 and to the close pilot 42 of the main stage valve 28. When the solenoid is not energized, engine pressure in the vent pilot 50 biases the pilot valve 32 to the vent position.

In operation, when the engine pressure is above the priority pressure setting 20 (as shown in Fig. 1), the main stage valve 28 is maintained in the open position because the engine pressure in the open pilot 36 overcomes the bias force of the biasing spring 46. If flow to the cooling jets 66 is not required (e.g., as determined by a controller), the solenoid 54 is energized and engine pressure is provided to the close pilot 42, such that pressure in the open pilot 36 is negated and the bias force of the biasing spring 46 moves the main stage valve 28 into the closed position.

When engine pressure drops below the priority pressure setting 20, the bias force of the biasing spring 46 overcomes the bias of the open pilot 36 and the main stage valve 28 is moved to the closed position. In the closed position, the engine pressure can be utilized by other systems that are considered to be more critical. Fig. 3 illustrates one example of the POCJ control valve 24 as described in Fig. 2.

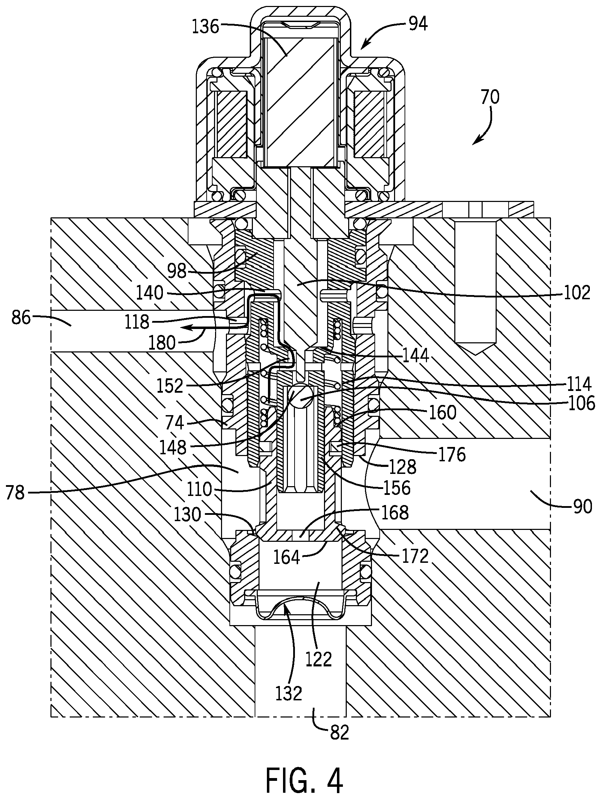

As shown in Fig. 4, a POCJ control valve 70 according to one embodiment of the invention includes a valve body 74 arranged to be received within an engine aperture 78 that includes a main oil galley 82, and oil pan vent 86, and a jet passage 90. The POCJ control valve 70 also includes a solenoid 94 coupled to the valve body 74, a pilot housing 98 received within the valve body 74, a pilot poppet 102 received within the pilot housing 98 and actuatable by the solenoid 94, a check valve 106 received within the pilot housing 98, a main stage poppet 110 slidably received with in the pilot housing 98 and in selective sealing contact with the valve body 74, and a biasing spring 114 arranged between the pilot housing 98 and the main stage poppet 110.

The valve body 74 defines oil pan vents 118 in communication with the oil pan vent 86, a main galley port 122 in communication with the main oil galley 82, cooling jet ports 128 in communication with the jet passage 90, and a main valve seat 130. A filter 132 can be engaged with the main galley port 122. In other embodiments, the filter 132 is eliminated or located in another part of the POCJ control valve 70 or another part of the system.

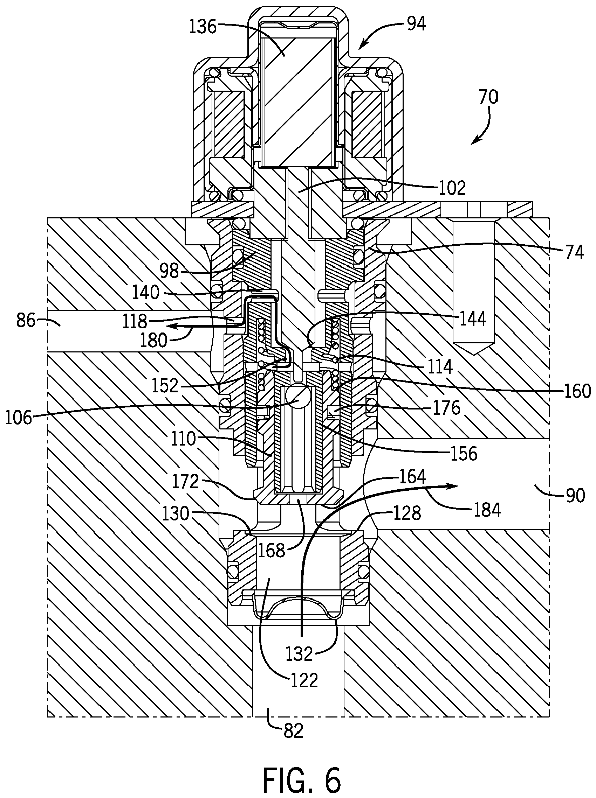

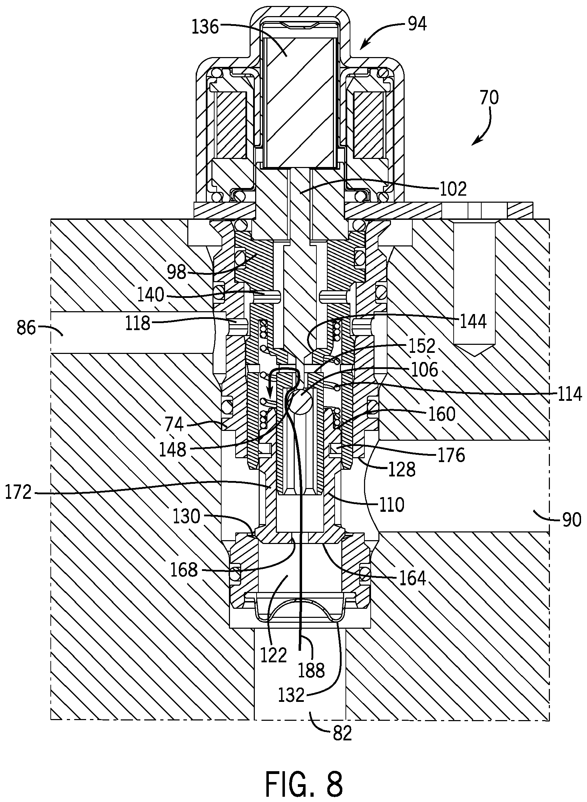

The solenoid 94 includes an armature 136 that is moveable between a first position (shown in Figs. 4 and 6) and a second position (shown in Fig. 8). The armature 136 is arranged to engage the pilot poppet 102.

The pilot housing 98 includes pilot oil pan vents 140 in communication with the oil pan vents 118 of the valve body 74, a pilot poppet seat 144, a check valve seat 148, a spring chamber passage 152, and a spindle 156.

The main stage poppet 110 includes a top surface area 160, a bottom surface area 164, a main stage aperture 168, and a main valve element 172. The main stage poppet 110 also includes a seal element in the form of a seal 176 that provides a seal between the main stage poppet 110 and the pilot housing 98.

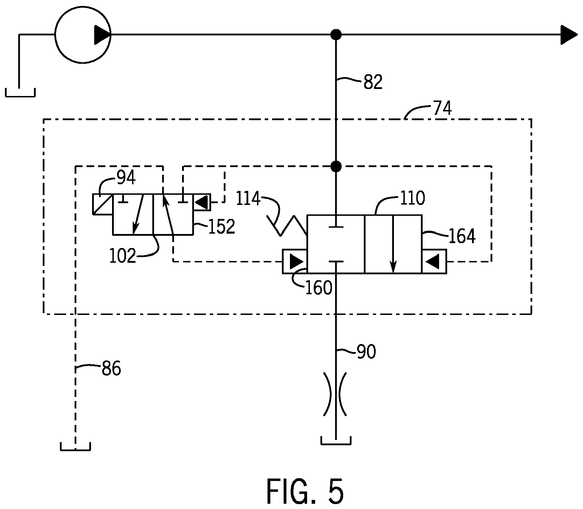

Operation of the POCJ control valve 70 will be discussed below with respect to Figs. 4-9. As shown in Figs. 4 and 5, when engine pressure within the main oil galley 82 is below the priority pressure setting 20, a biasing force of the biasing spring 114 overcomes the force applied to the main stage poppet 110 and moves the main stage poppet 110 to a closed position such that the main valve element 172 engages the main valve seat 130 and inhibits oil flow to the cooling jet passage 90.

In the configuration shown in Figs. 4 and 5, the solenoid is deactivated (i.e., not receiving energy) and the engine pressure is acting to engage the check valve 106 with the check valve seat 148. In turn, the pilot poppet 102 is pushed out of engagement with the pilot poppet seat 144. In this arrangement, the oil pan vent 86 is in communication with the top surface area 160 of the main stage poppet 110 via the spring chamber passage 152, the unblocked pilot poppet seat 144, the pilot oil pan vent 140, and the oil pan vent 118 of the valve body 74. Arrow 180 represents the above described flow path.

The check valve 106 inhibits flow between the main oil galley 82 and the top surface area 160 of the main stage poppet 110. The biasing spring 114 is sized such that when the engine pressure is below the priority pressure setting 20, the bias force of the biasing spring 114 overcomes the engine pressure, and moves the main stage poppet 110 to the closed position. Fig. 5 represents the above described arrangement schematically.

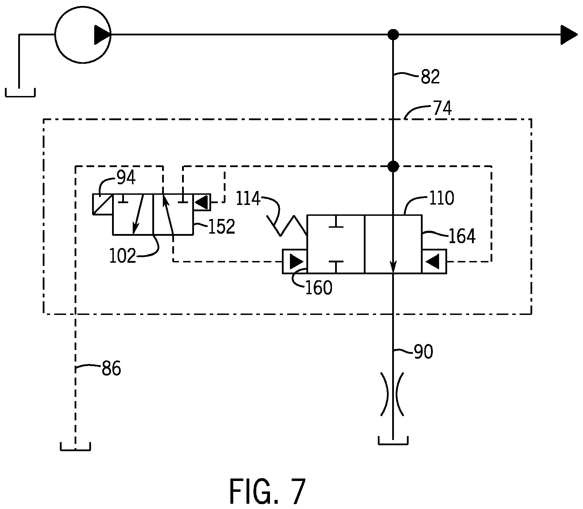

As shown in Figs. 6 and 7, when the engine pressure is greater than the priority pressure setting 20, and the solenoid 94 is not energized, the engine pressure acting on the bottom surface area 164 of the main stage poppet 110 overcomes the bias force of the biasing spring 114 and the main poppet valve 110 moves to the open position where flow is provided between the main oil galley 82 and the cooling jet passage 90 past the main valve seat 130. Oil flow from the main oil galley 82 to the cooling jet passage 90 is represented by arrow 184. Flow path 180 is still provided in this arrangement.

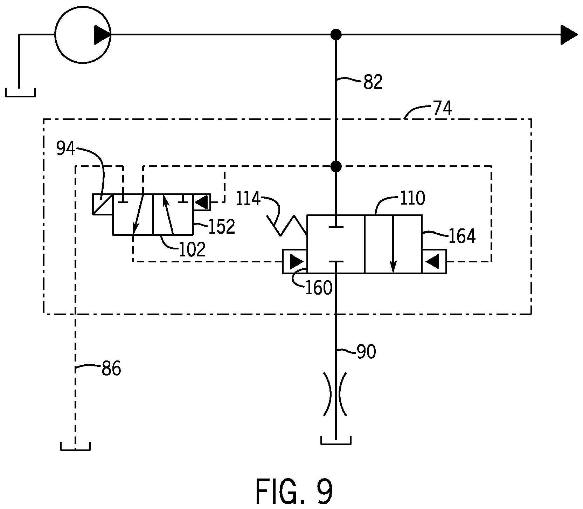

As shown in Figs. 8 and 9, when the solenoid 94 is energized, the armature 136 is moved into the second position and the pilot poppet 102 is forced into engagement with the pilot valve seat 144. The pilot poppet 102 also forces the check valve 106 out of engagement with the check valve seat 148. In this arrangement the flow path 180 is eliminated, and the top surface area 160 of the main stage poppet 110 receives the engine pressure from the main oil galley 82 via the aperture 168, the check valve seat 148, and the spring chamber passage 152. Flow between the main oil galley 82 and the top surface area 160 is represented as flow path 188. With the pressure applied to the top surface area 160 and the bottom surface area 164, the bias force of the biasing spring 114 forces the main stage poppet 110 to the closed position such that flow path 184 is eliminated. In other words, flow is inhibited between the main oil galley 82 and the cooling jet passage 90.

To summarize, the POCJ control valve 70 can be an integrated 2-position 3-way pilot valve that allows the main poppet spring chamber to be normally vented to a reservoir (oil pan). Above the pre-set priority pressure, the poppet will open and flow is sent to the cooling jets. When the solenoid is energized, the pilot valve closes the vent path and connects equal pressure to both sides of the main stage poppet. With the pressure provided to both the top surface area 160 and the bottom surface area 164, the main stage poppet 110 is balanced and the bias force of the biasing spring 114 acts to close the main stage poppet 110, blocking flow to the jets.

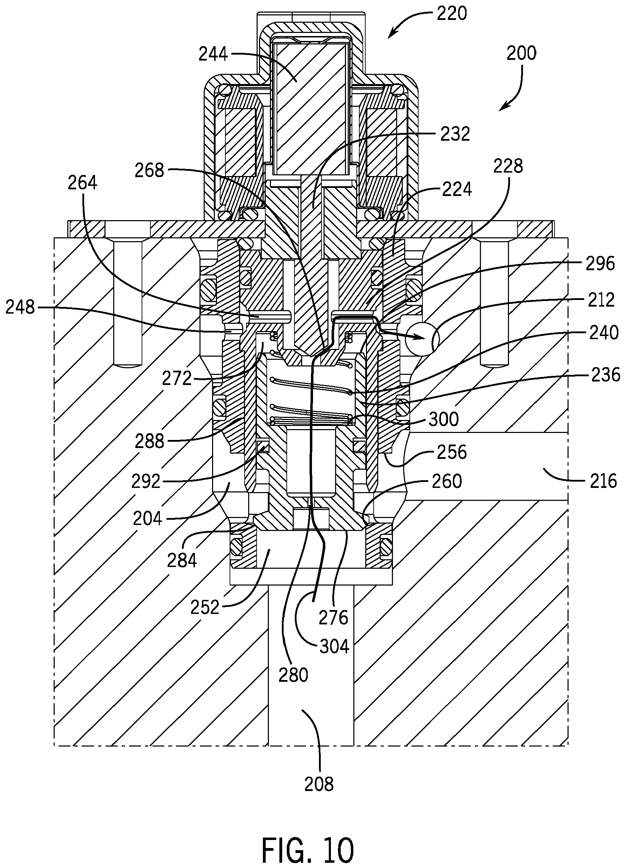

Figs. 10-15 show another POCJ control valve 200 according to another embodiment of the invention. The POCJ control valve 200 is received within an engine aperture 204 that includes a main oil galley 208, and oil pan vent 212, and a jet passage 216. The POCJ control valve 200 includes a solenoid 220, a valve body 224, a pilot housing 228, a pilot poppet 232, a main stage poppet 236, and a biasing spring 240.

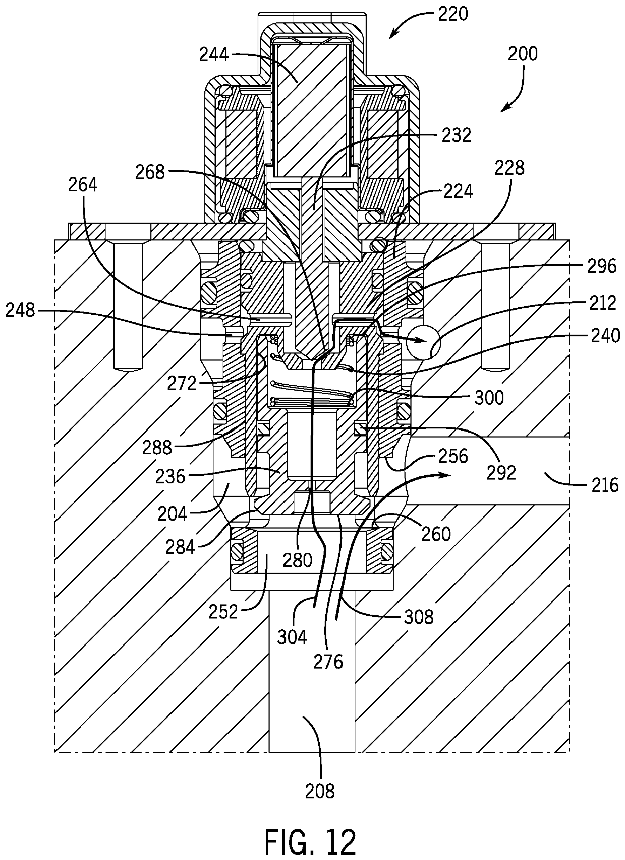

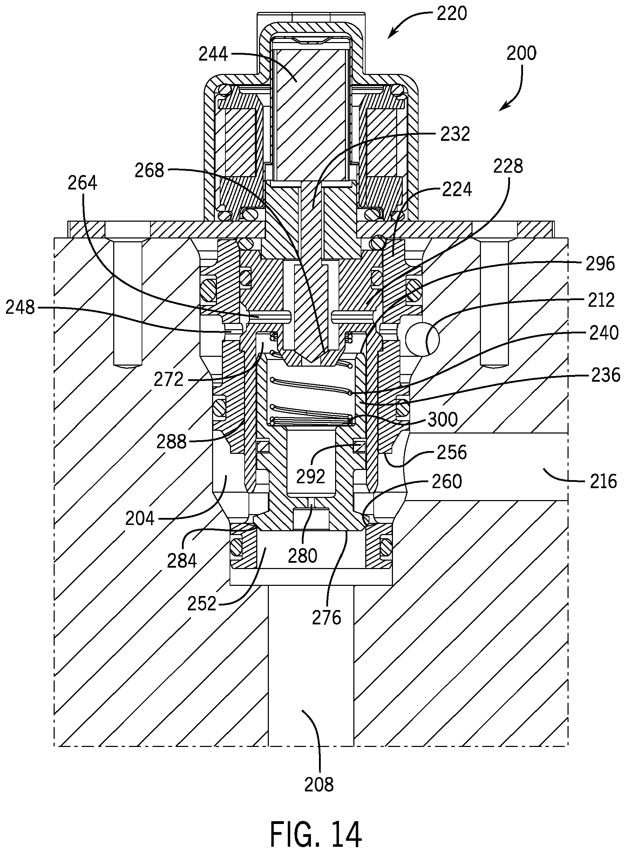

The solenoid 220 includes and armature 244 that is movable between a first position (as shown in Figs. 10 and 12) and a second position (as shown in Fig. 14).

The valve body 224 defines oil pan vents 248 in communication with the oil pan vent 212, a main galley ports 252 in communication with the main oil galley 208, cooling jet vents 256 in communication with the jet passage 216, and a main valve seat 260.

The pilot housing 228 is received within the valve body 224 and defines pilot oil pan vents 264, a pilot valve seat 268 and an inner bore 272.

The main stage poppet 236 defines a bottom surface area 276, an orifice 280, a main valve element 284, a outer surface 288 sized to be received within the inner bore 272 of the pilot housing 228, a seal 292, a top surface area 296, and a spring shoulder 300.

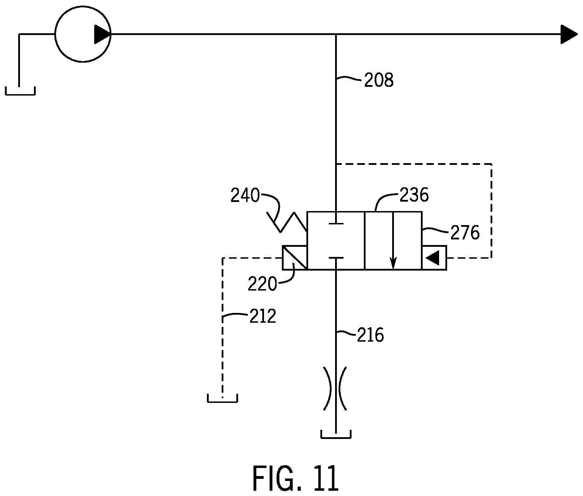

In operation, as shown in Figs. 10 and 11, when engine pressure in the main oil galley 208 is below the priority pressure setting 20 and the solenoid 94 is deactivated, the engine pressure acts on the pilot poppet 232 and moves it to a pilot open position such that flow is provided between the main oil galley 208 and the oil pan vent 212 via a flow path 304. The orifice 280 restricts flow along the flow path 304 such that a pressure differential dP can exist across the orifice 280. When the engine pressure in the main oil galley 208 is below the priority pressure setting 20, the combination of pressure acting on the top surface area 296 and the bias force of the biasing spring 240 is larger than the pressure based force acting on the bottom surface area 276 of the main stage poppet 236. When this is the case, the main valve element 284 is brought into engagement with the main valve seat 260 and flow is inhibited between the main oil galley 208 and the cooling jet passage 216.

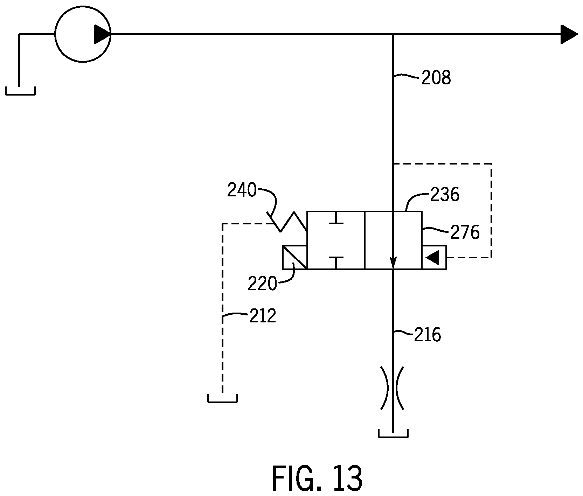

As shown in Figs. 12 and 13, when the engine pressure in the main oil galley 208 is greater that the priority pressure setting 20, then the pressure forces acting on the bottom surface area 276 of the main stage poppet 236 is larger than the combination of pressure acting on the top surface area 296 and the bias force of the biasing spring 240 and the main stage poppet 236 moves to an open position where flow is provided between the main oil galley 208 and the cooling jet passage 216, as represented by the flow path 308. With the solenoid 220 still deactivated, the flow path 304 is also still provided.

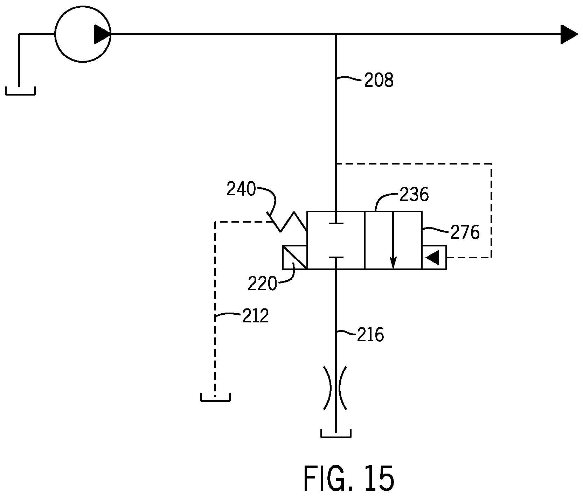

As shown in Figs. 14 and 15, when the solenoid 220 is activated or energized the armature 244 forces the pilot poppet 232 into engagement with the pilot valve seat 268 and flow between the oil pan vent 212 and the main oil galley 208 is inhibited. In other words, the flow path 304 is eliminated. The orifice 280 allows the engine pressure to equalize on the top surface area 296 and the bottom surface area 276 and the bias force of the biasing spring 240 moves the main stage poppet 236 to the closed position.

Generally, in POCJ control valves, the main stage valve spring chamber is vented to a low pressure passage (i.e., draining to the oil pan) to reduce the pressure drop across the main poppet. In current applications, there may be no economical way to connect to a low pressure passage. In a current system where priority pressure is desired, the pressure drop across the main poppet from the pump port to the work port will be at least equal to the priority pressure set by the poppet areas and the bias spring. That is, in such a system, the minimum pressure drop will be equal to the priority pressure, unless some mechanism is employed to open the poppet further. The pressure drop across the main poppet represents energy lost to heat. Thus, decreasing this pressure drop improves efficiency of the system.

Due to the current deficiencies in current POCJ control valves, it would be desirable to have a POCJ control valve that provides a reduced pressure drop, and thereby increased efficiency, between a pump port and a work port. In one configuration, a reduced pressure drop may be achieved by increasing the main poppet stroke (i.e., biasing the main poppet further from its main poppet seat) compared to what would occur with a constant pilot flow area. Displacing the main poppet further from the main poppet seat can provide a larger flow area, and reduce the pressure drop between a pump port and a work port of a POCJ control valve.

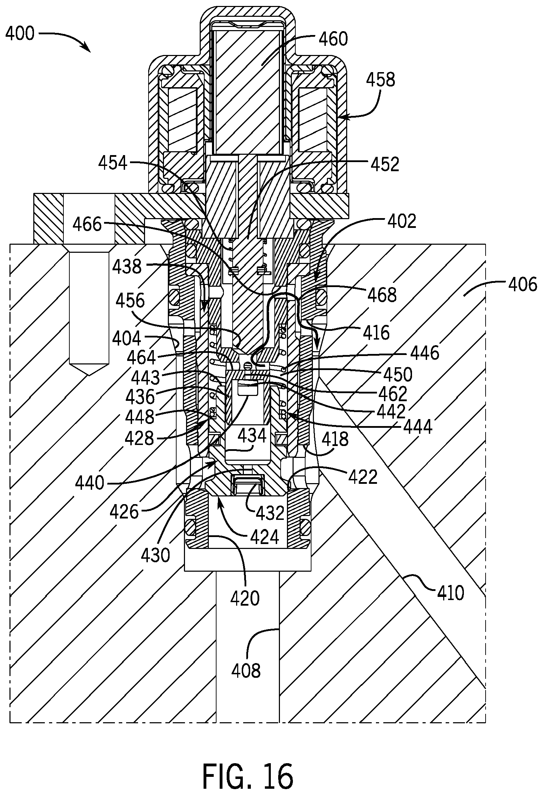

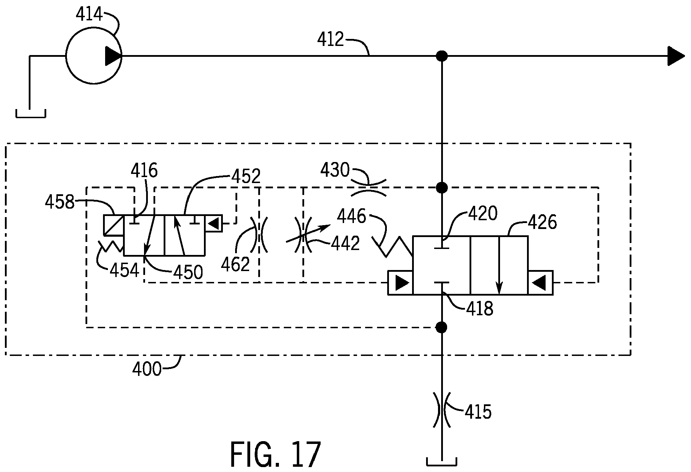

Figs. 16-21 illustrate one non-limiting example of a POCJ control valve 400 according to another embodiment of the invention. With specific reference to Figs. 16 and 17, the POCJ control valve 400 can include a valve body 402 configured to be received within an engine aperture 404. The engine aperture 404 can be arranged within an engine structure 406 that can include a main oil passage 408 and a jet passage 410. The main oil passage 408 can be in fluid communication with a main oil galley 412, which receives oil from a pump 414. The jet passage 410 can be in fluid communication with at least one POCJ 415.

The valve body 402 can define a pilot passage 416, a main passage 418, and a galley passage 420. The pilot passage 416 and the main passage 418 can extend radially through the valve body 402 and can be longitudinally spaced from each other. The pilot passage 416 and the main passage 418 can be in fluid communication with the jet passage 410. The galley passage 420 can extend axially through a distal end of the valve body 402 and can be in fluid communication with the main oil passage 408.

A main poppet seat 422 can be arranged at a junction between the pilot passage 416 and the main passage 418. The main poppet seat 422 can be dimensioned to engage a seat end 424 of a main poppet 426. The main poppet 426 can be slidably received within a main poppet housing 428, which is arranged within the valve body 402. The main poppet 426 can define a balanced design (i.e., an outer diameter of the main poppet 426 can be equal to a diameter defined by the main poppet seat 422). The main poppet 426 can include a control orifice 430 in fluid communication with the galley passage 420 through a filter 432. The control orifice 430 can provide a fluid path into an inner bore 434 defined by the main poppet 426. The inner bore 434 of the main poppet 426 can be dimensioned to receive a stem 436 that extends from a distal end of a pilot poppet housing 438. The stem 436 defines one or more rectangular windows 440 therein. An upper edge 443 of the main poppet 426 opposite the seat end 424 can be arranged to moveably cover, or close, the rectangular windows 440 of the pilot poppet housing 438. As the main poppet 426 slides within the main poppet housing 428, the upper edge 443 of the main poppet 426 can variably cover the rectangular windows 440 thereby forming a variable orifice 442. The variable orifice 442 can be arranged downstream of and in series with the control orifice 430. The series combination of the variable orifice 442 and the control orifice 430 can control a pressure drop across the main poppet 426 (i.e., a pressure differential between a spring end 444 and the seat end 424 of the main poppet 426).

The main poppet 426 can be biased by a main spring 446 into a closed position where the seat end 424 engages the main poppet seat 422. In the closed position, fluid communication can be inhibited between the galley passage 420 and the main passage 418. The main spring 446 can extend between a top surface 448 of the main poppet 426 and the pilot poppet housing 438, and can be arranged within a spring chamber 450. The spring chamber 450 can be defined by the spring end 444 of the main poppet 426, the pilot poppet housing 438, and the main poppet housing 428. The main poppet 426 can be moveable from the closed position to an open position where fluid communication is provided between the galley passage 420 and the main passage 418 when a pressure in the galley passage 420 is above a priority pressure. The priority pressure can be determined by a biasing force provided the main spring 446 on the main poppet 426 in a direction toward the main poppet seat 422.

A pilot poppet 452 can be slidably received within the pilot poppet housing 438. A pilot spring 454 can bias the pilot poppet 452 into a close position where the pilot poppet 452 engages a pilot poppet seat 456. In the closed position, the pilot poppet seat 456 can inhibit fluid communication between the spring chamber 450 and the pilot passage 416. The pilot poppet 452 can be biased to an open position where fluid communication is provided between the spring chamber 450 and the pilot passage 416 when a pressure in the spring chamber is above a pilot pressure. The pilot pressure can be less than the priority pressure. The pilot poppet 452 can also be biased into the open and closed positions by a solenoid 458 coupled thereto. The solenoid 458 can include an armature 460 that can be coupled to the pilot poppet 452. The armature 460 can be moveable between a first position and a second position, which can correspond with the closed position and open position of the pilot poppet 452, in response to energizing the solenoid 458.

The pilot poppet housing 438 can define a bleed orifice 462 and a spring chamber passage 464. The bleed orifice 462 can be arranged upstream of the pilot poppet seat 456 and can extend axially through the pilot poppet housing 438. The bleed orifice 462 can be arranged in parallel with the variable orifice 442 and in series with the control orifice 430 when the variable orifice 442 is closed. In this way, the bleed orifice 462 can provide fluid communication from the galley passage 420 to the spring chamber 450 when the pilot poppet is in the closed position and the variable orifice 442 is closed.

The spring chamber passage 464 can extend radially through the pilot poppet housing 438, and can be arranged between the bleed orifice 462 and the pilot poppet seat 456. When the pilot poppet 452 is in the open position, the spring chamber passage 464 can provide fluid communication from the spring chamber 450 to the pilot passage 416 through a housing passage 466 that extends through the pilot poppet housing 438 and the main poppet housing 428.

Operation of the POCJ control valve 400 will be discussed with reference to Figs. 16-21. As shown in Figs. 16 and 17, with the pressure in the main oil galley 412 below the priority pressure and the solenoid 458 de-energized, the main poppet 426 can be biased into the closed position be the main spring 446. The pilot poppet 452 can be biased into the closed position by the pilot spring 454, until the pressure in the spring chamber 450 increases above the pilot pressure.

The pump 414 can supply pressurized fluid into the main oil galley 412, which can be communicated to the galley passage 420. The fluid supplied to the galley passage 420 can flow through the control orifice 430 and the variable orifice 442 and/or the bleed orifice 462 into the spring chamber 450. The fluid pressure in the spring chamber 450 can be communicated to the pilot poppet 452 via the spring chamber passage 464. Once the pressure in the spring chamber 450 increases above the pilot pressure, the pilot poppet 452 can overcome the force of the pilot spring 454 and move to the open position. This can allow fluid to flow from the spring chamber 450 to the pilot passage 416 and thereby to the jet passage 410 along a fluid path 468. The fluid path 468 can vent fluid from the spring chamber 450 to the jet passage 410 via the spring chamber passage 464, the housing passage 466, and the pilot passage 416.

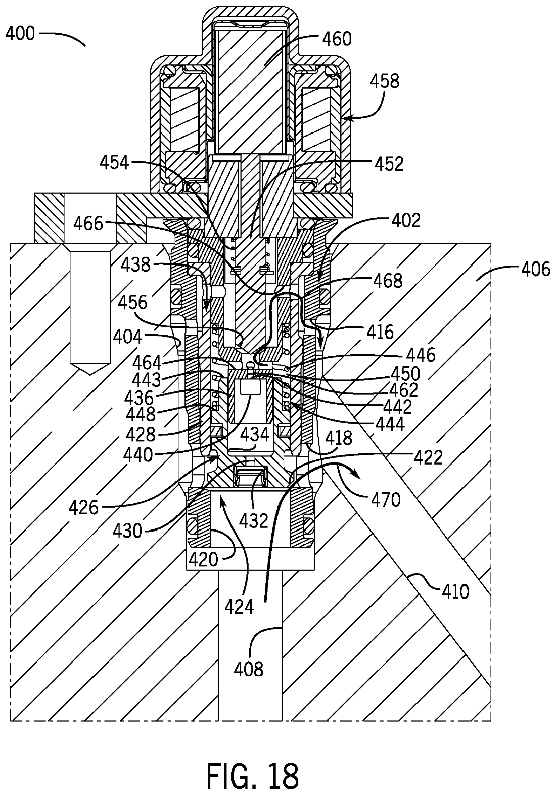

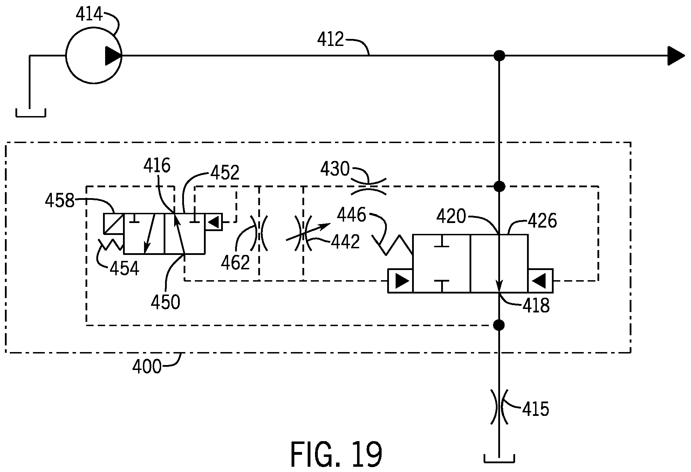

As shown in Figs. 18 and 19, when the pressure in the galley passage 420 increases above the priority pressure, the main poppet 426 can overcome the force of the main spring 446 and be biased into the open position. In the open position, fluid can flow from the galley passage 420 to the main passage 418 and thereby to the jet passage 410 along a fluid path 470. Since the priority pressure can be greater than the pilot pressure, the pilot poppet 452 can be in the open position and fluid can flow from the spring chamber 450 to the jet passage 410 along the fluid path 468.

As the main poppet 426 is displaced into the open position by the pressure in the galley passage 420, the upper edge 443 of the main poppet 426 can progressively cover more of the rectangular windows 440. In this way, the variable orifice 442 can close down as the main poppet 426 moves to the open position thereby reducing the fluid flow into the spring chamber 450 and the pressure therein. Thus, the pressure exerted on the spring end 444 of the main poppet 426 can reduce as the main poppet 426 opens, which can increase the pressure drop across the main poppet 426 and increase the stroke of the main poppet 426. That is, the main poppet 426 can be forced to open further as the pressure drop increases until the variable orifice 442 is closed by the upper edge 443 of the main poppet 426. This functionality and design of the POCJ control valve 400 can enable the main poppet 426 to open further when compared to a constant pilot flow area design. With an increased stroke of the main poppet 426, the flow area between the galley passage 420 and the main passage 418 can increase. An increased flow area can reduce a pressure drop between the galley passage 420 and the main passage 418. The reduced pressure drop can increase an efficiency provided by the POCJ control valve 400.

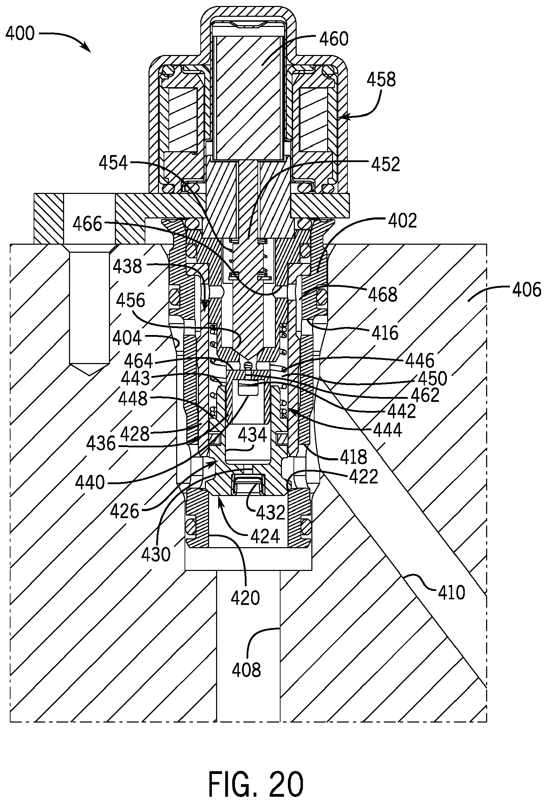

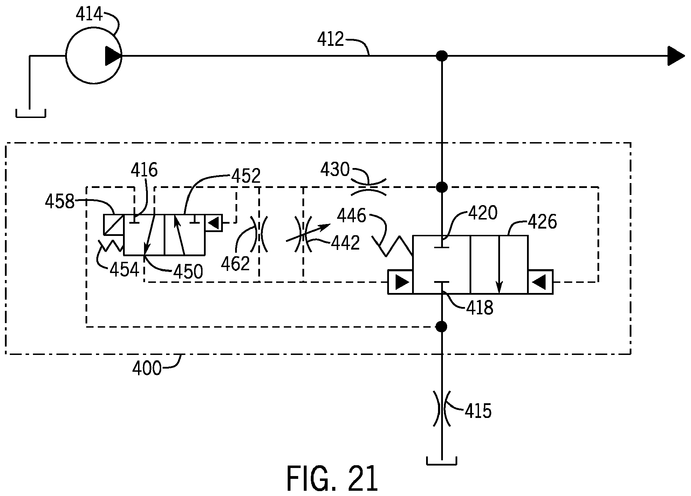

As shown in Figs. 20 and 21, when the solenoid 458 is energized, the armature 460 can actuate to the first position thereby displacing the pilot poppet 452 into the closed position. With the pilot poppet 452 in the closed position, the pressure from the galley passage 420 can be communicated to the spring chamber 450 through the control orifice 430 and the bleed orifice 462. Thus, the pressure on the spring end 444 and the seat end 424 can be substantially equal, or balanced. The main spring 446 can disrupt the balanced pressure forces on the main poppet 426 and force the main poppet 426 into the closed position. When the solenoid 458 is energized, the pilot poppet 452 and the main poppet 426 can be forced into their closed positions.

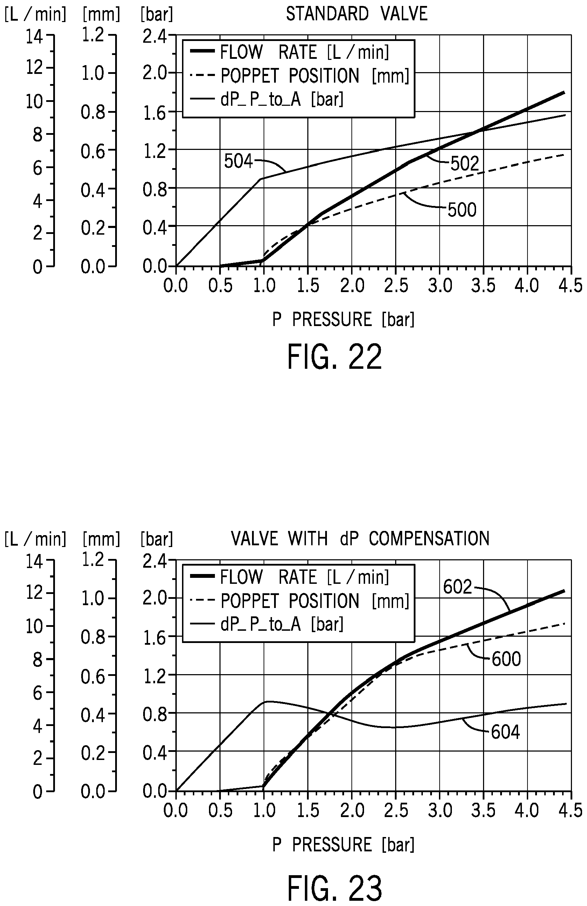

As described above, the design and properties of the POCJ control valve 400 can provide an increased efficiency due to a reduced pressure drop between the galley passage 420 and the main passage 418. Figs. 22 and 23 graphically illustrate this reduced pressure drop achieved by the POCJ control valve 400. Specifically, Fig. 22 is a graph illustrating a main poppet position (line 500), a fluid flow rate from a galley passage to a main passage (line 502), and a pressure differential between the galley passage and the main passage (line 504) as a function of pressure in the galley passage. The graph of Fig. 22 represents the operational characteristics of a standard control valve with a constant pilot flow area design (i.e., a control valve that does not include a variable orifice that enables the main poppet to further increase its stroke when opening). Fig. 23 is a graph illustrating a position of the main poppet 426 (line 600), a fluid flow rate from the galley passage 420 to the main passage 418 (line 602), and a pressure differential between the galley passage 420 and the main passage 418 (line 604) as a function of pressure in the galley passage 420.

As shown in Figs. 22 and 23, the main poppet 426 displaces substantially further open (line 600) when compared to the standard control valve (line 500). As a result, the POCJ control valve 400 provides a substantially decreased pressure drop (line 604 vs. line 504) and increased fluid flow (line 602 vs. line 502).

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. A pilot operated piston oil cooling jet control valve configured to be in communication with a main oil galley, an oil pan, and a cooling jet, the pilot operated piston oil cooling jet control valve comprising:
a valve body;
a pilot valve arranged within the valve body and including a solenoid armature movable between a first position and a second position, and a pilot poppet movable between a pilot open position where flow is provided to the oil pan and a pilot closed position where flow is inhibited to the oil pan; and
a main stage poppet arranged within the valve body and movable between a closed position where flow is inhibited to the cooling jet and an open position where flow is provided to the cooling jet.

2. The pilot operated piston oil cooling jet control valve of claim 1, wherein the pilot valve includes a pilot housing, the main stage poppet received within the pilot housing.

3. The pilot operated piston oil cooling jet control valve of claim 1, further comprising a spring arranged to bias the main stage poppet toward the closed position.

4. The pilot operated piston oil cooling jet control valve of claim 1, further comprising a check valve arranged to selectively inhibit flow between the main oil galley and the oil pan.

5. The pilot operated piston oil cooling jet control valve of claim 1, wherein when the solenoid armature is in the second position, the pilot poppet is forced into the pilot closed position.

6. The pilot operated piston oil cooling jet control valve of claim 1, wherein when the pilot poppet is in the pilot closed position, the main stage poppet is moved toward the closed position.

7. The pilot operated piston oil cooling jet control valve of claim 1, wherein the pilot poppet is arranged to selectively force a check valve into a check valve open position.

8. The pilot operated piston oil cooling jet control valve of claim 1, wherein the main stage poppet is arranged to move toward the closed position when an engine pressure in the main oil galley is below a priority pressure setting.

9. The pilot operated piston oil cooling jet control valve of claim 1, wherein when the solenoid armature is in the second position, the main stage poppet is moved toward the closed position.

10. The pilot operated piston oil cooling jet control valve of claim 1, wherein when the solenoid armature is in the second position, the main stage poppet is forced into the closed position.

11. The pilot operated piston oil cooling jet control valve of claim 1, wherein the valve body further comprises a spring chamber arranged therein, and wherein when the pilot poppet is in the open position, fluid communication is provided from the spring chamber to the cooling jet, and when the pilot poppet is in the closed position, fluid communication is inhibited between the spring chamber and the cooling jet.

12. The pilot operated piston oil cooling jet control valve of claim 1, further comprising a variable orifice arranged within the valve body, wherein when the main poppet moves toward the open position, the variable orifice is configured to close to increase a pressure drop across the main poppet.

13. The pilot operated piston oil cooling jet control valve of claim 12, wherein the increased pressure drop across the main poppet provided by the variable orifice, when the main poppet moves toward the open position, is configured to reduce a pressure drop between the main oil galley and the cooling jet.

14. The pilot operated piston oil cooling jet control valve of claim 12, wherein the variable orifice is formed by an upper edge of the main poppet and one or more windows within a pilot poppet housing.

15. The pilot operated piston oil cooling jet control valve of claim 12, further comprising a control orifice formed by the main poppet and arranged in series with the main oil galley upstream of a spring chamber formed in the valve body, wherein the variable orifice is arranged downstream of and in series with the control orifice; and
a bleed orifice arranged downstream of and in series with the control orifice, wherein when the pilot poppet is in the closed position, the bleed orifice communicates the pressure in the main oil galley to the spring chamber.
